# EUROPEAN PATENT APPLICATION

(11) **EP 4 458 525 A1**
(43) Date of publication of application: **06.11.2024**
(21) Application number: 23891749.6
(22) Date of filing: 19.07.2023
(51) Int. Cl.: B25J 11/00, B25J 5/00, B25J 7/00, B25J 9/16, B25J 13/08, B25J 15/00, B25J 18/06, B25J 19/02, B62D 55/265

(54) **EXPLORATION ROBOT FOR CUSTOMS INSPECTION OF CARGO LOADED ON CONTAINER**

(30) Priority: 18.11.2022 KR 20220155134; 13.06.2023 KR 20230075333
(71) Applicant: Korea Advanced Institute of Science and Technology, Daejeon 34141 (KR); Ujin Technology, Inc., Daejeon 34054 (KR)
(72) Inventor: KYUNG, Ki Uk, Daejeon 34141 (KR); RYU, Jee Hwan, Daejeon 34141 (KR); YI, Ye Sung, Daejeon 34141 (KR); MUN, Hee Ju, Daejeon 34141 (KR); KIM, Ji Sung, Daejeon 34141 (KR); LEE, Dong Geol, Daejeon 34141 (KR); LEE, Joong Ku, Daejeon 34141 (KR); KIM, Young Geun, Daejeon 34069 (KR); EUM, Gee Joon, Daejeon 34054 (KR); KIM, Hyun Su, Daejeon 35371 (KR); JO, Hyun Soo, Daejeon 35339 (KR); KIM, Jun Young, Daejeon 35265 (KR)
(74) Representative: Mewburn Ellis LLP
(86) International application number: PCT/KR2023/010372
(87) International publication number: WO 2024/106675

(57) **Abstract**

Disclosed herein is an exploration robot for the customs inspection of cargo loaded on a container. The exploration robot includes: an attachment-type mobile robot configured to drive in the state of being attached to the top surface of a container; and a flexible robot system configured to interface with the attachment-type mobile robot, to selectively accommodate and extend a flexible robot having multiple degrees of freedom, and to perform inspection on cargo.

## Description

### Technical Field

The present invention relates to an exploration robot for the customs inspection of cargo loaded on a container, and more particularly, to an exploration robot capable of being attached to and moving on the ceiling of a container, and penetrating into cargo and then collecting samples.

### Background Art

Container cargoes transported by large ships or vessels are popularized and utilized for trade and other purposes. Container terminals at ports provide interfaces between the marine transportation of containers and the ground transportation of the containers, and efficiently handle incoming and outgoing containers at the ports.

Meanwhile, the inspection of incoming containers is an important process for safety and security purposes and for the purpose of checking whether government regulations are being observed when goods are shipped.

In order to inspect large containers, there are required the process of opening a container, the process of scanning and inspecting cargo, and the process of collecting samples of the cargo. Conventionally, inspectors have performed the processes personally.

More specifically, the total unloading inspection, which is the currently adopted inspection method, requires the process of unloading all the cargoes loaded in front by using a forklift and manpower in order to reach the cargo to be inspected. Due to the inspection manpower, inspection cost, and inspection time generated during this process, only a limited number of containers can be inspected within a limited time. Furthermore, there are cases in which cargoes are damaged during an inspection process.

Meanwhile, a scanner capable of seeing through the inside of cargo is also used during inspection. However, even when cargo is scanned through a scanner, human actions, such as the action of specifying the cargo to be scanned, need to be essentially involved. There is also a problem in that accurate cargo scanning is not performed due to the poor performance of a scanner.

Therefore, there is a demand for technology that enables rapid inspection, accurate inspection, and low-cost inspection while minimizing human intervention.

### Disclosure

### Technical Problem

The present invention is intended to overcome the problems of the above-described prior art.

An object of the present invention is to enable the inside of a container having a size of 40 feet or more to be explored and cargo to be inspected without unloading or after partially unloading irregular cargoes loaded into the container, thereby minimizing inspection cost and time, and preventing the distribution of illegal cargoes, thereby helping promote a healthy social atmosphere.

The objects of the present invention are not limited to the object mentioned above, and other objects not mentioned will be clearly understood from the following description.

### Technical Solution

According to an embodiment of the present invention for achieving the above-described object, there is provided an exploration robot for the customs inspection of cargo loaded on a container, the exploration robot including: an attachment-type mobile robot configured to drive in the state of being attached to the top surface of a container; and a flexible robot system configured to interface with the attachment-type mobile robot, to selectively accommodate and extend a flexible robot having multiple degrees of freedom, and to perform inspection on cargo.

The attachment-type mobile robot may include: caterpillar chains configured to enable driving on the top surface of the container; a sensor configured to recognize an obstacle while driving; and a sliding plate driving unit configured to enable degrees of freedom of movement of driving.

One or more permanent magnets configured to enable attachment to and driving on the top surface of the container may be included inside the caterpillar chains.

The flexible robot system may include: a spool configured to contain the flexible robot therein; and one or more rollers formed to supply the flexible robot from the inside of the spool to the outside.

An inspection device configured to perform external inspection and sample collection on the cargo may be formed at a distal end of the flexible robot.

The inspection device may include: an exterior inspection unit configured to inspect the exterior of the cargo through exterior imaging or scanning; a puncture unit configured to puncture the packing material of the cargo; and a micro-robot arm configured to enter the inside of the cargo through the area punctured by the puncture unit and then collect a sample.

### Advantageous Effects

According to an embodiment of the present invention, it may be possible to explore the inside of a container having a size of 40 feet or more and inspect cargo without unloading or after partially unloading irregular cargoes loaded into the container. Accordingly, inspection cost and time may be minimized, and the distribution of illegal cargoes may be prevented, thereby helping promote a healthy social atmosphere.

### Description of Drawings

FIG. 1 is a view showing the overall configuration of an exploration robot system according to an embodiment of the present invention;
FIG. 2 is a view showing the detailed configuration of an attachment-type mobile robot according to an embodiment of the present invention;
FIG. 3 is a view showing the detailed configurations of the supply device and flexible robot of a flexible robot system according to an embodiment of the present invention;
FIG. 4 is a view showing the configuration of the inspection device of a flexible robot system according to an embodiment of the present invention; and
FIG. 5 is a diagram showing a process of performing the customs inspection of cargo loaded on a container through an exploration robot according to an embodiment of the present invention.

### Best Mode

The following detailed description of the present invention makes reference to the accompanying drawings that illustrate, by way of example, specific embodiments in which the present invention may be practiced. These embodiments will be described in sufficient detail to enable a person skilled in the art to practice the present invention. It should be understood that the various embodiments of the present invention are different from each other but are not necessarily mutually exclusive. For example, specific shapes, structures, and characteristics described in one embodiment herein may be implemented in another embodiment without departing from the spirit and scope of the invention. Furthermore, it should be understood that the locations or arrangements of individual components within each disclosed embodiment may be changed without departing from the spirit and scope of the invention. Accordingly, the detailed description set forth below is not to be taken in a limiting sense, and the scope of the present invention is limited only by the attached claims and all equivalents to the attached claims if appropriately described. Like reference numerals in the drawings denote the same or similar function throughout various aspects.

Embodiments of the present invention will be described in detail below with reference to the accompanying drawings so that a person having ordinary skill in the art to which the present invention pertains can easily practice the present invention.

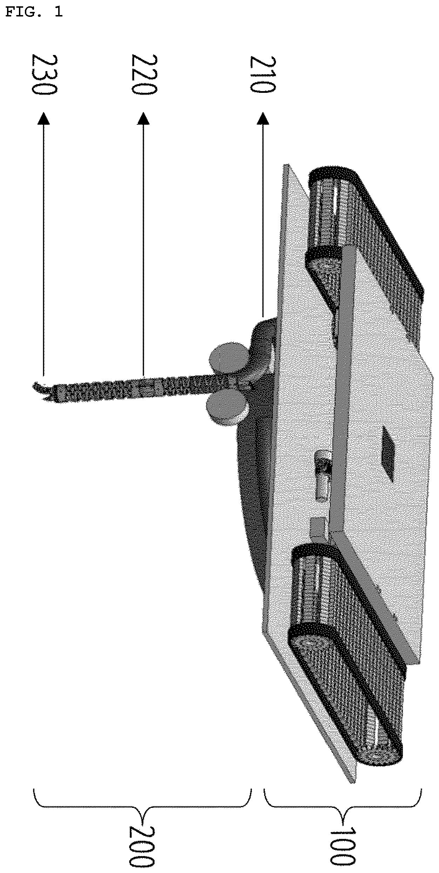

FIG. 1 is a view showing the overall configuration of an exploration robot system according to an embodiment of the present invention.

Referring to FIG. 1, the exploration robot system according to the present embodiment may include an attachment-type mobile robot 100 and a flexible robot system 200.

The attachment-type mobile robot 100 is configured to be attached to and then driven on the top surface of the inside of a container.

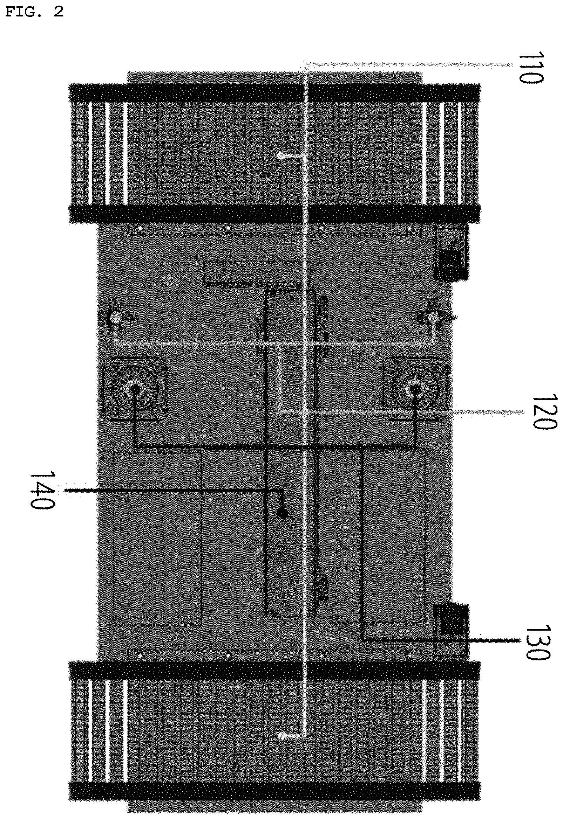

FIG. 2 is a view showing the detailed configuration of the attachment-type mobile robot 100 according to an embodiment of the present invention.

Referring to FIG. 2, the attachment-type mobile robot 100 may include caterpillar chains 110, cameras 120, proximity sensors 130, and a sliding plate driving unit 140. The caterpillar chains 110, the cameras 120, the proximity sensors 130, and the sliding plate driving unit 140 may be disposed together on one side of the attachment-type mobile robot 100. At least some of them may be disposed on one side of the attachment-type mobile robot 100, and the remainder may be disposed on the other side.

The caterpillar chains 110 come into and are rotated in contact with the top surface of a container, thereby enabling driving. Furthermore, permanent magnets may be included in the caterpillar chains 110. Through the permanent magnets, the attachment-type mobile robot 100 may drive in the state of being attached to the top surface of a container.

The cameras 120 and the proximity sensors 130 perform the function of recognizing an obstacle while driving. The proximity sensors 130 may each be implemented as, e.g., a laser sensor or a lidar sensor. When an obstacle is recognized, a control signal for changing a driving direction may be generated. Such control signals may be generated by a control unit present inside or outside the attachment-type mobile robot 100. The sliding plate driving unit 140 performs the function of enabling degrees of freedom of movement in driving, e.g., two degrees of freedom of movement, and integrating the interfaces between a supply device and a flexible robot described below.

Meanwhile, referring to FIG. 1 again, the flexible robot system 200 may include a supply device 210, a flexible robot 220, and an inspection device 230.

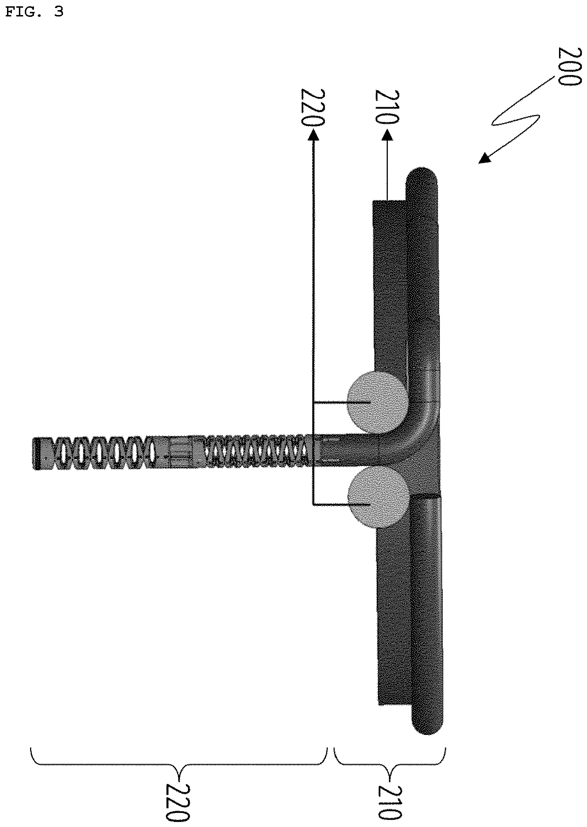

FIG. 3 is a view showing the detailed configurations of the supply device 210 and flexible robot 220 of the flexible robot system 200 according to an embodiment of the present invention.

Referring to FIG. 3, the supply device 210 contains the flexible robot 220 having a length of about 3 m, and serves to supply the flexible robot 220 through rollers. To this end, the supply device 210 may include a spool 211 configured to contain the flexible robot 220, and rollers 212 configured to stably supply the flexible robot 220 from the inside of the spool 211 to the outside without twisting.

The flexible robot 220 has multiple degrees of freedom and may be accommodated inside the spool 211. For example, the flexible robot 220 may be accommodated in a spiral form inside the spool 211. A guide configured to supply and draw in the flexible robot 220 may be formed inside the spool 211 so that the flexible robot 220 can be accommodated in a predetermined shape.

The spool 211 may be formed in a hollow disk shape to accommodate the flexible robot 220 therein. The variables required for the design of the spool 211 are the number of turns by which the flexible robot 220 is wound and the overall diameter of the flexible robot 220. Each of the variables may be specified according to the total length of the flexible robot 220.

Meanwhile, the rollers 212 may be disposed on both sides of an outlet formed in at least a part of the spool 211. Each of the rollers 212 may be implemented as a driving roller that provides frictional translation force between the flexible robot 220 and the roller 212 itself through active rotation or a pinching roller that assists the supply of the flexible robot 220 while always being in contact with the flexible robot 220 through manual rotation.

The rotational force of the motor required to drive the rollers 212 may be calculated based on the refraction angle of the flexible robot 220 and the diameter of the rollers 212.

Meanwhile, the flexible robot 220 is based on twisted string actuators. In order to enable the flexible robot 220 to move in gaps between irregular cargoes from the ceiling of a container to the floor thereof, driving having multiple degrees of freedom and the adjustment of rigidity may be performed by containing multiple twisted string actuator modules, and dividing the flexible robot 220 into several segments and then controlling the flexible robot 220.

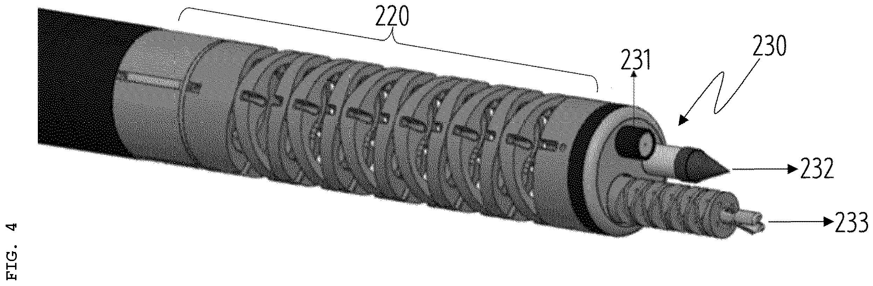

FIG. 4 is a view showing the configuration of the inspection device 230 of the flexible robot system 200 according to an embodiment of the present invention.

Referring to FIG. 4, the inspection device 230 is formed at a distal end of the flexible robot 220 and is responsible for external inspection and sample collection for cargo.

The inspection device 230 inspects the exterior of suspected cargo and, if necessary, collects a sample using a puncture device and a micro-robot arm. To this end, the inspection device 230 may include an exterior inspection unit 231, a puncture unit 232, and a micro-robot arm 233.

The exterior inspection unit 231 is capable of translational movement, so that it can be operated by 4-axis control motion together with the 3-axis movement of the flexible robot 220. The puncture unit 232 is configured to be detachable from the distal end of the flexible robot 220, and performs puncture by means of an appropriate opening method suitable for the material of the wrapping paper of the luggage. The micro-robot arm 233 performs a sample collection function, is composed of twisted string actuators and a rolling joint, and may be driven by three degrees-of-freedom (one translational motion, and two rotational motions) control through inverse kinematics analysis. A pair of spoon-type tongs for sample collection may be formed at the distal end of the micro-robot arm 233. Through this, various types of samples may be collected.

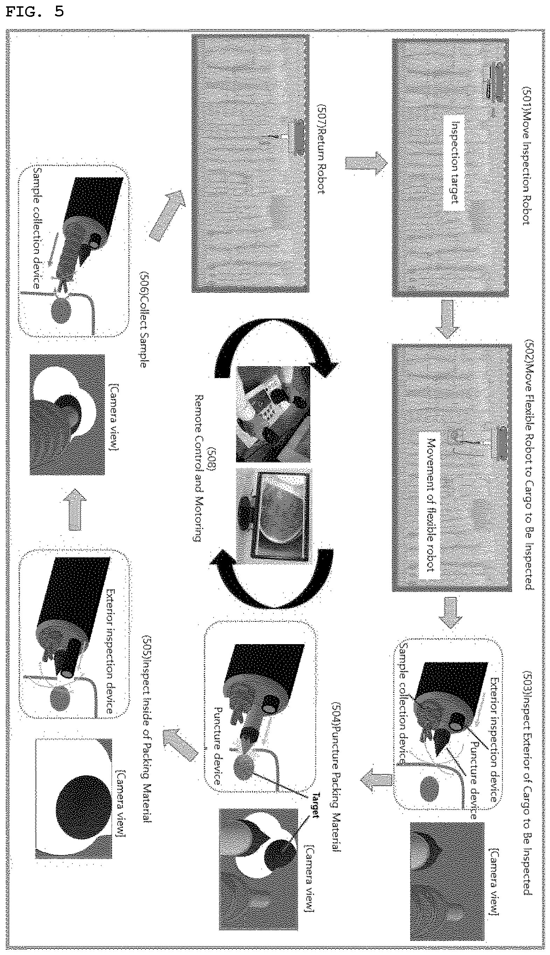

FIG. 5 is a diagram showing a process of performing the customs inspection of cargo loaded on a container through an exploration robot according to an embodiment of the present invention.

Referring to FIG. 5, first, the attachment-type mobile robot 100 of the exploration robot system is attached to the top surface of the inside of a container and then driven to the location of the cargo to be inspected in step S501.

After completing the above movement, the attachment-type mobile robot 100 is fixed onto the top surface of the container, and the flexible robot 220 is drawn out from the supply device 210 and moves vertically, so that it can approach an inspection target in step 502.

Thereafter, the exterior of cargo may be inspected through the information scanned through the exterior inspection unit 231 in step 503, and the puncture unit 232 can puncture the surface of suspected cargo in step 504. For example, it may be possible to puncture a packaging material containing cargo to be inspected in a sufficient size of 12 mm or more in diameter by using an appropriate puncture device.

In addition, the exterior inspection unit 231 is implemented as an imaging device such as a camera. Since the cargo is punctured, the imaging and inspection of the inside of the cargo are enabled in step 505.

Meanwhile, the micro-robot arm 233 may enter the inside of the cargo through the punctured space and collect a sample in step 506. In this case, the spoon-type tongs for sample collection attached to the distal end may be utilized.

When the inspection or sample collection is completed, the supply device 210 returns the flexible robot 220 to the spool 211 in step 507, releases the fixation of the attachment-type mobile robot 100, and then returns to a position outside the container.

The individual above-described operations of the attachment-type mobile robot 100 and the flexible robot system 200 may be performed by control signals generated from an external terminal in step 508. In addition, the information scanned or captured by the exterior inspection unit 231 is transmitted to the external terminal so that an administrator can check it.

According to an embodiment of the present invention, it may be possible to explore the inside of a container having a size of 40 feet or more and inspect cargo without unloading or after partially unloading irregular cargoes loaded into the container. Accordingly, inspection cost and time may be minimized, and the distribution of illegal cargoes may be prevented to help promote a healthy social atmosphere.

The above description of the present invention is intended for illustrative purposes, and a person having ordinary skill in the art to which the present invention pertains can understand that the embodiments described above may be easily modified into other specific forms without changing the technical spirit or essential features of the present invention. Accordingly, the embodiments described above should be understood as illustrative but not limitative in all respects. For example, each component described as being in a single form may be implemented in a distributed form, and similarly, components described as being distributed may be implemented in a combined form.

The scope of the present invention is defined by the following claims. All changes or modifications derived from the meanings and scope of the claims and their equivalents should be construed as being included in the scope of the present invention.

### Description of Reference Numerals

100: attachment-type mobile robot
110: caterpillar chains
120: cameras
130: proximity sensors
140: sliding plate driving unit
200: flexible robot system
210: supply device
211: spool
212: rollers
220: flexible robot
230: inspection device
231: exterior inspection unit
232: puncture unit
233: micro-robot arm

## Claims

1. An exploration robot for customs inspection of cargo loaded on a container, the exploration robot comprising:
an attachment-type mobile robot configured to drive in a state of being attached to a top surface of a container; and
a flexible robot system configured to interface with the attachment-type mobile robot, to selectively accommodate and extend a flexible robot having multiple degrees of freedom, and to perform inspection on cargo.

2. The exploration robot of claim 1, wherein the attachment-type mobile robot comprises:
caterpillar chains configured to enable driving on the top surface of the container;
a sensor configured to recognize an obstacle while driving; and
a sliding plate driving unit configured to enable degrees of freedom of movement of driving.

3. The exploration robot of claim 1, wherein one or more permanent magnets configured to enable attachment to and driving on the top surface of the container are included inside the caterpillar chains.

4. The exploration robot of claim 1, wherein the flexible robot system comprises:
a spool configured to contain the flexible robot therein; and
one or more rollers formed to supply the flexible robot from an inside of the spool to an outside.

5. The exploration robot of claim 1, wherein an inspection device configured to perform external inspection and sample collection on the cargo is formed at a distal end of the flexible robot.

6. The exploration robot of claim 5, wherein the inspection device comprises:
an exterior inspection unit configured to inspect an exterior of the cargo through exterior imaging or scanning;
a puncture unit configured to puncture a packing material of the cargo; and
a micro-robot arm configured to enter an inside of the cargo through an area punctured by the puncture unit and collect a sample.
